# EUROPEAN PATENT SPECIFICATION

(11) **EP 4 203 351 B1**
(45) Date of publication and mention of the grant of the patent: **12.08.2026**
(21) Application number: 21871491.3
(22) Date of filing: 22.09.2021
(51) Int. Cl.: H04L 41/5051, H04L 61/4541, H04L 101/659

(54) **PRIVATE NETWORK-BASED NETWORK INTERCOMMUNICATION METHOD AND DEVICE, AND COMPUTER CLUSTER**
VERFAHREN UND VORRICHTUNG ZUR KOMMUNIKATION ZWISCHEN PRIVATEN NETZWERKEN UND COMPUTERCLUSTER
PROCÉDÉ ET DISPOSITIF D'INTERCOMMUNICATION DE RÉSEAU BASÉS SUR UN RÉSEAU PRIVÉ, ET GROUPE D'ORDINATEURS

(30) Priority: 22.09.2020 CN 202011003839
(43) Date of publication of application: 28.06.2023
(73) Proprietor: Huawei Cloud Computing Technologies Co., Ltd., Guizhou 550025 (CN)
(72) Inventor: SHAN, Weihua, Shenzhen, Guangdong 518129 (CN); YAN, Dashuai, Shenzhen, Guangdong 518129 (CN)
(74) Representative: Grünecker Patent- und Rechtsanwälte PartG mbB
(86) International application number: PCT/CN2021/119602
(87) International publication number: WO 2022/063121

(56) References cited:
- WO-A1-2010/099680
- WO-A1-2018/036667
- CN-A- 102 326 157
- CN-A- 102 447 747
- CN-A- 102 447 747
- CN-A- 110 191 031
- US-A1- 2004 240 468
- US-A1- 2005 030 956
- US-A1- 2009 113 521
- ROSENBERG J ET AL: "SIP: Session Initiation Protocol", 20020601; 20020600, 1 June 2002 (2002-06-01), pages 1 - 269, XP015009039
- CARPENTER, B. ET AL.: "Connection of IPv6 Domains via IPv4 Clouds", IETF RFC 3056, 28 February 2001 (2001-02-28), pages 1 - 23, XP002240357

## Description

### TECHNICAL FIELD

This application relates to the field of communications technologies, and in particular, to a network interworking method based on a private network, a device, and a computer cluster.

### BACKGROUND

With popularization of the internet and rapid development of big data and cloud computing technologies, a scale of internet users is increasingly large. A surge in the scale of internet users leads to an increase in bandwidth occupied by the internet users when accessing the internet, causing a sharp increase in bandwidth costs. This restricts development of the internet to some extent.

Currently, there are many unused bandwidth resources in a private network. If the internet can borrow these bandwidth resources, bandwidth costs can be reduced significantly.

However, the private network can only unidirectionally interwork with the internet currently. To be specific, a network device in the private network can only unidirectionally access the internet, but a device in the internet cannot access the private network. Such a unidirectional interworking manner becomes a problem to be urgently resolved in a solution in which the internet borrows bandwidth resources from the private network.

Rosenberg J. et al.: "SIP: Session Initiation Protocol", 20020601; 20020600, 1 June 2002 (2002-06-01), pages 1-269, XP015009039 describe the SIP, while CN 102 447 747 A describes a method, device and system for interacting with a private network via a gateway.

### SUMMARY

The invention is defined according to the independent claims. The dependent claims recite advantageous embodiments.

This application provides a network interworking method based on a private network, a device, and a computer cluster, so as to implement interconnection and interworking between the private network and another network.

According to a first aspect, an embodiment of this application provides a network interworking method based on a private network. The method may be performed by a device deployed in a public network (a public network device for short). The method includes: The public network device may first obtain a network service deployment permission from a private network device, and after obtaining the network service deployment permission, may indicate the private network device to deploy a network service, and record an IPv6 address of the private network device deployed with the network service, for example, record a correspondence between an identifier of the network service and the IPv6 address of the private network device. When receiving, from a client, a service query request used to request the IPv6 address of the private network device deployed with the network service, the public network device may provide the IPv6 address of the private network device with the network service to the client.

According to the foregoing method, when the client needs the private network device to provide the network service, the client may first obtain the IPv6 address of the private network device from the public network device, so as to implement interconnection and interworking between the private network and another network (such a public network or another private network), making it possible for the internet to borrow resources from the private network.

In a possible implementation, the network service deployment permission obtained by the public network device from the private network device may be requested by the public network device from the private network device. For example, the public network device may send a service deployment request to the private network device, where the service deployment request is used to request to deploy the network service. Then, the public network device may receive a service deployment response from the private network device, where the service deployment response is used to agree to deploy the network service.

According to the foregoing method, the public network device may request the network service deployment permission from the private network device, so that the network service can be deployed subsequently.

In a possible implementation, the service deployment request may further indicate a first preferential policy, where the first preferential policy is preferential fee information for the private network device that is provided to the private network device. A quantity of first preferential policies is not limited herein, and there may be one or more first preferential policies, so that the private network device performs selection from the plurality of first preferential policies.

According to the foregoing method, in order to deploy the network service in the private network device, the public network device may provide some preferential policies, so that the private network device can provide the network service deployment permission.

In a possible implementation, alternatively, the network service deployment permission obtained by the public network device from the private network device may be actively provided by the private network device. For example, the public network device may receive a resource occupation permission of the private network device, where the resource occupation permission is used to indicate that it is allowed to occupy a resource of the private network device to deploy the network service.

According to the foregoing method, the private network device may actively request to deploy the network service, so as to improve initiative of the private network device, which is applicable to other scenarios.

In a possible implementation, the resource occupation permission further includes a second preferential policy, where the second preferential policy is preferential fee information proposed by the private network device for the private network device. A quantity of second preferential policies is not limited herein, and there may be one or more second preferential policies, so that the public network device performs selection from the plurality of second preferential policies.

According to the foregoing method, when the private network device actively requests to deploy the network service, the private network device may further raise its requirement for a preferential fee.

In a possible implementation, when the network service is updated, or the network service needs to be deleted or migrated, the public network device may further indicate the private network device to update the network service.

According to the foregoing method, the public network device may update the network service in time, so as to ensure the validity of the network service deployed in the private network device.

In a possible implementation, the public network device may further receive an updated IPv6 address of the private network device from the private network device, and update the locally stored IPv6 address of the private network device.

According to the foregoing method, the public network device may obtain the updated IPv6 address, so as to ensure that the latest and most accurate IPv6 address of the private network device can be always stored locally, and ensure the validity of the IPv6 address provided to the client.

According to a second aspect, an embodiment of this application provides a network interworking method based on a private network. The method may be performed by a private network device in a private network. In the method, the private network device may provide a network service deployment permission to a device in a public network; and then deploy the network service according to an indication of the device in the public network, and may further send an IPv6 address of the private network device to the device in the public network. After the network service is deployed, the private network device may provide the network service for a client, that is, the private network device may receive a service request from the client, where the service request is used to request the network service; and then return a service response based on the service request.

According to the foregoing method, the network service may be deployed in the private network device, and the IPv6 address of the private network device is provided to the public network device, so that the client may access the private network device to obtain the network service, thereby implementing interconnection and interworking between the private network device and a device in another network.

In a possible implementation, the private network device may provide the network service deployment permission to the device in the public network at a request of the public network device. For example, the private network device may receive a service deployment request from the device in the public network, where the service deployment request is used to request to deploy the network service; and then send a service deployment response to the device in the public network, where the service deployment response is used to agree to deploy the network service.

According to the foregoing method, the private network device provides the network service deployment permission at the request of the public network device, so that the network service can be deployed subsequently.

In a possible implementation, the service deployment request is further used to indicate a first preferential policy, and the first preferential policy is preferential fee information for the private network device that is provided to the private network device. A quantity of first preferential policies is not limited herein, and there may be one or more first preferential policies. When there are a plurality of first preferential policies, the private network device performs selection from the plurality of first preferential policies, and includes the selected first preferential policy to the service deployment response.

According to the foregoing method, the private network device may obtain a corresponding preferential policy when agreeing to deploy the network service, so that a solution of deploying the network service in the private network device is more feasible.

In a possible implementation, alternatively, the network service deployment permission provided by the private network device to the device in the public network may be actively proposed by the private network device. For example, the private network device may send a resource occupation permission to the device in the public network, where the resource occupation permission is used to indicate that it is allowed to occupy a resource of the private network device to deploy the network service.

According to the foregoing method, the private network device may actively request to deploy the network service, so as to improve initiative of the private network device, which is applicable to other scenarios.

In a possible implementation, the resource occupation permission further includes a second preferential policy, where the second preferential policy is preferential fee information proposed by the private network device for the private network device. A quantity of second preferential policies is not limited herein, and there may be one or more second preferential policies, so that the public network device performs selection from the plurality of second preferential policies.

According to the foregoing method, when the private network device actively requests to deploy the network service, the private network device may further actively raise its requirement for a preferential fee, so as to obtain corresponding compensation.

In a possible implementation, the private network device may further update the network service according to an indication of the device in the public network.

According to the foregoing method, the timely update of the network service can ensure the validity of the network service deployed in the private network device.

In a possible implementation, when the IPv6 address of the private network device is updated, the private network device may send the updated IPv6 address to the device in the public network.

According to the foregoing method, the private network device may provide the updated IPv6 address in time, so as to ensure that the public network device can obtain the latest and most accurate IPv6 address of the private network device.

According to a third aspect, an embodiment of this application provides a network interworking method based on a private network. The method may be performed by a device deployed in a public network (a public network device for short). The method includes: The public network device may first obtain an IPv6 address revelation permission from a private network device, and after obtaining the IPv6 address revelation permission, may obtain an IPv6 address of the private network device and an identifier of the private network device from the private network device deployed with a network service. When receiving, from a client, an address query request used to request the IPv6 address of the private network device deployed with the network service, the private network device may provide the IPv6 address of the private network device with the network service to the client based on the identifier of the private network device, where the address query request includes the identifier of the private network device.

According to the foregoing method, when the client is to access the private network device, the client may first obtain the IPv6 address of the private network device from the public network device, and then communicate with the private network device based on the IPv6 address of the private network device, thereby implementing interconnection and intercommunication between the private network and another network (such as a public network or another private network).

In a possible implementation, the IPv6 address revelation permission obtained by the public network device from the private network device may be requested by the public network device from the private network device. For example, the public network device may send an address obtaining request to the private network device, where the address obtaining request is used to request the IPv6 address of the private network device. Then, the public network device may receive an address obtaining response from the private network device, where the address obtaining response is used to agree to reveal the IPv6 address, and the address obtaining response includes the IPv6 address and the identifier of the private network device.

According to the foregoing method, the public network device may request the IPv6 address from the private network device, so that the IPv6 address can be subsequently provided to the client that is to access the private network device.

In a possible implementation, the address obtaining request may further indicate a first preferential policy, where the first preferential policy is preferential fee information for the private network device that is provided to the private network device. A quantity of first preferential policies is not limited herein, and there may be one or more first preferential policies, so that the private network device performs selection from the plurality of first preferential policies.

According to the foregoing method, in order to deploy the network service in the private network device and reveal the IPv6 address of the private network device, the public network device may provide some preferential policies, so that the private network device can provide the IPv6 address revelation permission.

In a possible implementation, alternatively, the IPv6 address obtained by the public network device from the private network device may be actively provided by the private network device. The public network device may receive the IPv6 address of the private network device and the identifier of the private network device from the private network device, that is, the private network device provides the IPv6 address revelation permission by actively sending the IPv6 address of the private network device and the identifier of the private network device.

According to the foregoing method, the public network device actively provides the IPv6 address revelation permission, thereby improving the initiative of the private network device, which is applicable to other scenarios.

In a possible implementation, when actively providing the IPv6 address revelation permission, the public network device may further send a second preferential policy, where the second preferential policy is preferential fee information for the private network device that is proposed by the private network device. A quantity of second preferential policies is not limited herein, and there may be one or more second preferential policies, so that the public network device performs selection from the plurality of second preferential policies.

According to the foregoing method, when the private network device actively requests to deploy the network service and the IPv6 address revelation address, the private network device may further raise its requirement for a preferential fee.

In a possible implementation, the public network device may further receive an updated IPv6 address or identifier of the private network device from the private network device, and update the locally stored IPv6 address or identifier of the private network device.

According to the foregoing method, the public network device may obtain the updated IPv6 address or identifier, so as to ensure that the latest and most accurate IPv6 address or identifier of the private network device can be always stored locally, and ensure that the real and valid IPv6 address can be provided to the client.

According to a fourth aspect, an embodiment of this application provides a network interworking method based on a private network. The method may be performed by a private network device in a private network. In the method, the private network device may provide an IPv6 address revelation permission to a device in a public network; and then send an IPv6 address of the private network device and an identifier of the private network device to the device in the public network. Then, the private network device may exchange data with a client, for example, may receive a data message from the client, where a destination address of the data message is the IPv6 address of the private network device.

According to the foregoing method, the private network device provides the IPv6 address of the private network device to the public network device, so that the client may access the private network device that has exchanged data, thereby implementing interconnection and interworking between the private network device and a device in another network.

In a possible implementation, the network service deployment permission provided by the private network device to the device in the public network may be provided at a request of the public network device. For example, the private network device may receive an address obtaining request from the device in the public network, where the address obtaining request is used to request the IPv6 address of the private network device, and the address obtaining request is further used to indicate a situation to be faced after the IPv6 address is revealed. After the user confirms the situation that the user is to face after the IPv6 address is revealed, the private network device sends an address obtaining response to the device in the public network, where the address obtaining response is used to agree to reveal the IPv6 address, and the address obtaining response includes the IPv6 address and the identifier of the private network device.

According to the foregoing method, the private network device provides the IPv6 address at the request of the public network device, so that the public network device can provide the IPv6 address to the client subsequently.

In a possible implementation, alternatively, the network service deployment permission provided by the private network device to the device in the public network may be actively provided by the private network device. For example, the private network device may send the IPv6 address and the identifier of the private network device to the device in the public network according to an indication of the user.

According to the foregoing method, the private network device may actively request to reveal the IPv6 address, thereby improving the initiative of the private network device, which is applicable to other scenarios.

In a possible implementation, when the IPv6 address or identifier of the private network device is updated, the private network device may send the updated IPv6 address or identifier to the device in the public network.

According to the foregoing method, the private network device may provide the updated IPv6 address or identifier in time, so as to ensure that the public network device obtains the latest and most accurate IPv6 address or identifier of the private network device.

According to a fifth aspect, an embodiment of this application further provides a public network device. For beneficial effects, refer to descriptions of the first aspect. Details are not described herein again. The apparatus has a function of implementing the behavior in the method example in the first aspect. The function may be implemented by hardware, or may be implemented by hardware executing corresponding software. The hardware or the software includes one or more modules corresponding to the foregoing function. In a possible design, a structure of the apparatus includes a node management module, a service management module, and an address resolution module. These modules may perform corresponding functions in the method example in the first aspect. For details, refer to the detailed descriptions in the method example. Details are not described herein again.

According to a sixth aspect, an embodiment of this application further provides a private network device. For beneficial effects, refer to descriptions of the second aspect. Details are not described herein again. The apparatus has a function of implementing the behavior in the method example in the second aspect. The function may be implemented by hardware, or may be implemented by hardware executing corresponding software. The hardware or the software includes one or more modules corresponding to the foregoing function. In a possible design, a structure of the apparatus includes a node proxy module and a service proxy module. These modules may perform corresponding functions in the method example in the second aspect. For details, refer to the detailed descriptions in the method example. Details are not described herein again.

According to a seventh aspect, an embodiment of this application further provides a public network device. For beneficial effects, refer to descriptions of the third aspect, and details are not described herein again. The apparatus has a function of implementing the behavior in the method example in the third aspect. The function may be implemented by hardware, or may be implemented by hardware executing corresponding software. The hardware or the software includes one or more modules corresponding to the foregoing function. In a possible design, a structure of the apparatus includes a node management module and an address resolution module. The modules may perform corresponding functions in the method example in the third aspect. For details, refer to the detailed descriptions in the method example. Details are not described herein again.

According to an eighth aspect, an embodiment of this application further provides a private network device. For beneficial effects, refer to descriptions of the fourth aspect, and details are not described herein again. The apparatus has a function of implementing the behavior in the method example in the fourth aspect. The function may be implemented by hardware, or may be implemented by hardware executing corresponding software. The hardware or the software includes one or more modules corresponding to the foregoing function. In a possible design, a structure of the apparatus includes a node proxy module, and the modules may perform corresponding functions in the method example in the fourth aspect. For details, refer to the detailed descriptions in the method example. Details are not described herein again.

According to a ninth aspect, an embodiment of this application further provides a computing device. The computing device includes a processor and a memory, and may further include a communications interface. The processor executes program instructions in the memory to perform the method according to any one of the first aspect or the possible implementations of the first aspect. The memory is coupled to the processor, and the memory stores necessary program instructions and data. The communications interface is configured to communicate with another device, for example, receive an IPv6 address and a service query request of a private network device, and send a service query response.

According to a tenth aspect, an embodiment of this application further provides a computing device. The computing device includes a processor and a memory, and may further include a communications interface. Optionally, the computing device further includes a display. The processor executes program instructions in the memory to perform the method according to any one of the second aspect or the possible implementations of the second aspect. The memory is coupled to the processor, and the memory stores necessary program instructions and data. The communications interface is configured to communicate with another device, for example, send an IPv6 address, receive a service request, and return a service response. The display is configured to display information to a user when triggered by the processor.

According to an eleventh aspect, an embodiment of this application further provides a computing device. The computing device includes a processor and a memory, and may further include a communications interface. The processor executes program instructions in the memory to perform the method according to any one of the third aspect or the possible implementations of the third aspect. The memory is coupled to the processor, and the memory stores necessary program instructions and data. The communications interface is configured to communicate with another device, for example, receive an IPv6 address or identifier of a private network device, and an address query request, and send an address query response.

According to a twelfth aspect, an embodiment of this application further provides a computing device. The computing device includes a processor and a memory, and may further include a communications interface. Optionally, the computing device further includes a display. The processor executes program instructions in the memory to perform the method according to any one of the fourth aspect or the possible implementations of the fourth aspect. The memory is coupled to the processor, and the memory stores necessary program instructions and data. The communications interface is configured to communicate with another device, for example, send an IPv6 address or identifier, or receive a data message. The display is configured to display information to a user when triggered by the processor.

According to a thirteenth aspect, this application provides a computing device cluster. The computing device cluster includes at least one computing device. Each computing device includes a memory and a processor. A processor of the at least one computing device is configured to access code in the memory to perform the method according to any one of the foregoing aspects or the possible implementations of the foregoing aspects.

According to a fourteenth aspect, this application provides a non-transient readable storage medium. When the non-transient readable storage medium is executed by a computing device, the computing device performs the method provided in any one of the first aspect or the possible implementations of the first aspect. The storage medium stores a program. The storage medium includes but is not limited to a volatile memory, for example, a random access memory, or a non-volatile memory, such as a flash memory, a hard disk drive (hard disk drive, HDD), and a solid-state drive (solid-state drive, SSD).

According to a fifteenth aspect, this application provides a computer program product. The computer program product includes computer instructions. When the computer instructions are executed by a computing device, the computing device performs the method according to any one of the first aspect or the possible implementations of the first aspect. The computer program product may be a software installation package. When the method according to any one of the foregoing aspects or the possible implementations of the foregoing aspects needs to be used, the computer program product may be downloaded and executed on the computing device.

According to a sixteenth aspect, this application further provides a computer chip. The chip is connected to a memory, and the chip is configured to read and execute a software program stored in the memory, to perform the method according to any one of the foregoing aspects or the possible implementations of the foregoing aspects.

### BRIEF DESCRIPTION OF DRAWINGS

FIG. 1 is a schematic diagram of a system architecture according to this application;
FIG. 2 is a schematic diagram of a network interworking method based on a private network according to this application;
FIG. 3A to FIG. 3C are schematic diagrams of a display interface presented to a user according to this application;
FIG. 4A to FIG. 4C are schematic diagrams of a display interface presented to a user according to this application;
FIG. 5 is a schematic diagram of a network interworking method based on a private network according to this application;
FIG. 6 is a schematic diagram of a structure of a computer cluster according to this application; and
FIG. 7 is a schematic diagram of a structure of a computer cluster according to this application.

### DESCRIPTION OF EMBODIMENTS

Before description of a network interworking method based on a private network, a device, and a computer cluster provided in the embodiments of this application, some concepts in the embodiments of this application are first described.

### 1. Private network

A private network is a network that implements interworking and interconnection between devices within a specific range. The private network is not a public network, but is established by an individual or an organization and is used within a specific range. A resource (such as a storage resource or a bandwidth resource) in the private network and a device in the private network are owned by the individual or organization.

There are many types of network devices in the private network, including but not limited to: a communication device, an entertainment device, a household appliance, a lighting device, a monitoring apparatus, a water/electricity/gas/heat meter, and a home alarm apparatus. A network device in a private network (a private network device for short) is configured with a network address, and the network address may be periodically allocated by an operator to the private network device. The private network device may access a device in the public network based on the network address.

### 2. Public network

A public network may also be referred to as a wide area network. A device in the wide area network and a device in the internet may access each other, and the access is not limited.

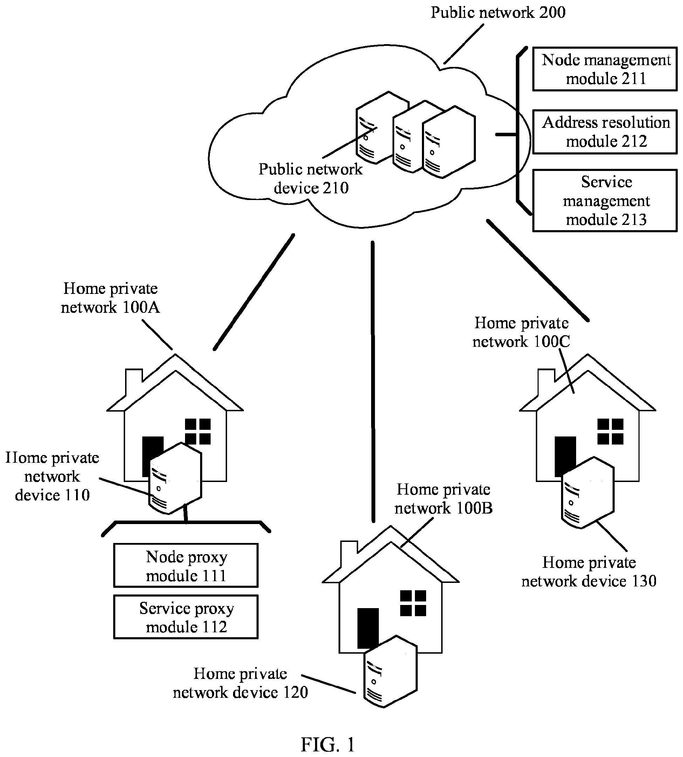

The following describes a system architecture applicable to a network interworking method based on a private network according to an embodiment of this application. FIG. 1 is a schematic diagram of a system architecture according to an embodiment of this application. The system architecture may include a network device deployed in a private network 100 (the network device may be referred to as a private network device) and a device deployed in a public network 200 (a device in the public network 200 may also be referred to as a public network device). A quantity of private networks 100 and a quantity of home network devices in the private network 100 are not limited in this embodiment of this application. In FIG. 1, only three private networks 100 are drawn as an example. To distinguish different private networks 100, the three private networks 100 are respectively named as a private network 100A, a private network 100B, and a private network 100C.

The private network 100 may include one or more private network devices. A type of the private network device is not limited in this embodiment of this application. The private network device includes but is not limited to: a modem, a router, a notebook computer, and the like.

In this embodiment of this application, a private network device in the private network 100 may implement a connection to a public network and a function of providing a network service externally. In actual application, a function of connecting to a public network and a function of providing a network service externally may be deployed in a plurality of private network devices of the private network 100, and implemented by cooperation of the plurality of private network devices.

In FIG. 1, a private network device in the private network 100A is identified as a private network device 110, a private network device in the private network 100B is identified as a private network device 120, and a private network device in the private network 100C is identified as a private network device 130.

In the following, modules included in a private network device are described by using the private network device 110 as an example.

The private network device 110 includes a node proxy module 111 and a service proxy module 112.

The node proxy module 111 is configured to connect the private network device 110 to the public network 200. For example, the node proxy module 111 may actively provide an internet protocol version 6 (internet protocol version 6, IPv6) address of the private network device 110 for a public network device 210 in the public network 200, or may provide the IPv6 address of the private network device 110 at a request of the public network device 210. The node proxy module 111 may further receive an access request from a network device in another network (such as a private network device in another private network 100 or another public network device), and returning an access response.

The service proxy module 112 may deploy a network service in the private network device 110 at a request of the public network device 210 when a user agrees to the request of the public network device 210. The service proxy module 112 may further manage the network service deployed on the private network device 110, including but not limited to running and updating of the network service. The service proxy module 112 is further configured to provide the network service for a service object of the network service. The service object (that is, an object that accepts the network service) of the network service may be another private network device deployed in the private network 110A, or may be a private network device deployed in another private network 100, or may be a public network device.

The public network may include one or more public network devices 210. A device form of the public network device 210 is not limited in this embodiment of this application. For example, the public network device 210 may be a server, or may be a virtual machine in a server, or may be a software apparatus deployed on a server or a virtual machine.

In this embodiment of this application, the public network device 210 in the public network is used as an example for description. The public network device 210 can be connected to a private network device in the private network 100, and manage the private network device 110 connected to the public network device 210. For example, the public network device 210 may deploy the network service on the private network device after obtaining a network service deployment permission of the private network device; and query, on a client, an IPv6 address of the private network device where the network service is located, and provide the IPv6 address of the private network device for the client. After obtaining an IPv6 address revelation permission of the private network device, the public network device 210 obtains the IPv6 address of the private network device, and returns the IPv6 address of the private network device when the client needs to query the IPv6 address of the private network device.

In actual application, a function of the public network device 210 may also be deployed in a plurality of public network devices 210 in the public network, and implemented by cooperation of the plurality of public network devices 210.

In the following, modules included in the public network device 210 are described by using the private network device 210 as an example.

The public network device 210 includes a node management module 211, an address resolution module 212, and a service management module 213.

The node management module 211 is configured to manage the private network device 110 connected to the public network device 210, including but not limited to: obtaining the IPv6 address revelation permission of the private network device, an identifier and IPv6 address of the private network device 110; storing a correspondence between the identifier and the IPv6 address of the private network device 110; and updating the correspondence between the identifier and the IPv6 address of the private network device 110.

The address resolution module 212 is configured to receive an address query request of another device (such as another public network device or a private network device in the private network 100). The address query request is used to request the IPv6 address of the private network device, and the address query request includes an identifier of the private network device. The address resolution module 212 may determine the IPv6 address of the private network device based on the identifier of the private network device and based on the correspondence between the identifier and the IPv6 address of the private network device, and returning an address query response to another device, where the address query response includes the IPv6 address of the private network device.

The service management module 213 is configured to: receive a program of the network service; deploy the program of the network service on one or more private network devices connected to the public network device 210 after obtaining the network service deployment permission from the private network device; and record the IPv6 address of the private network device deployed with the network service. A server management module 213 may further manage the program of the network service deployed on the one or more private network devices. For example, the service management module 213 updates the program of the network service on the one or more private network devices.

The address resolution module 212 is further configured to receive a service query request from another device (such as another public network device or a private network device in the private network 100). The service query request is used to request the IPv6 address of the private network device providing the network service. The address resolution module 212 may determine the IPv6 address of the private network device deployed with the network service, and returning a service query response to another device. The service query response includes the IPv6 address of the private network device.

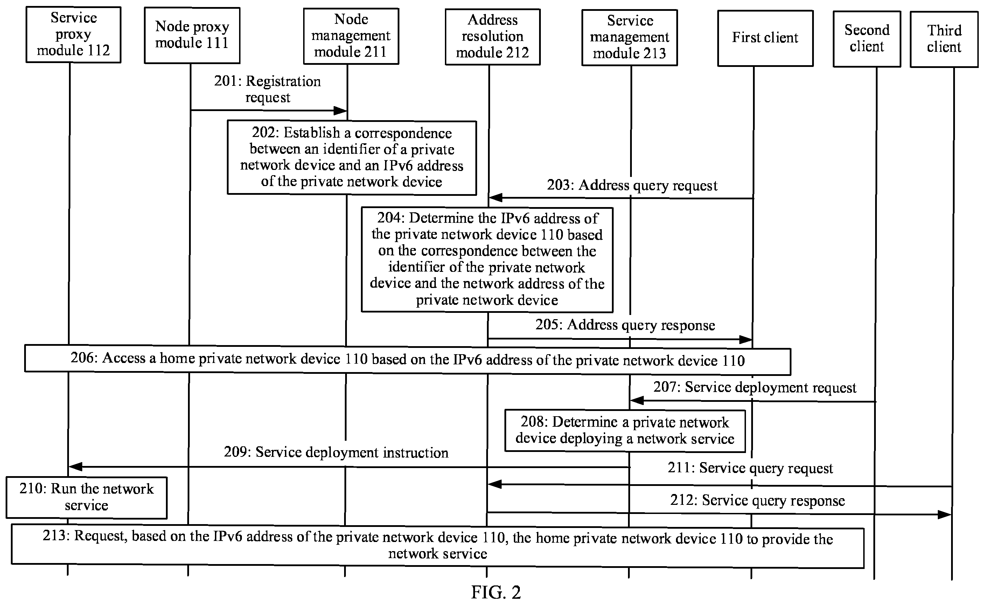

With reference to FIG. 2, a network interworking method based on a private network 100 provided in an embodiment of this application is described below by using interworking between a private network device 110 and a public network device 210 as an example. Referring to FIG. 2, the method includes two parts. One is a method for exchanging data between the private network device 110 and another device outside the private network 100, and reference may be made to steps 201 to 206. The other is a method for deploying a network service and providing the network service by the private network 100, and reference may be made to steps 206 to 213.

Step 201: A node proxy module 111 sends a registration request to a node management module 211, where the registration request includes an identifier of the private network device 110 and an IPv6 address of the private network device 110, and the registration request is used to request to register with the public network device 210. Herein, the node proxy module 111 sends the identifier of the private network device 110 and the IPv6 address of the private network device 110 by sending the registration request. In actual application, the node proxy module 111 may also send the identifier of the private network device 110 and the IPv6 address of the private network device 110 by using another message carrier. Any manner that can send the identifier of the private network device 110 and the IPv6 address of the private network device 110 is applicable to this embodiment of this application.

The identifier of the private network device 110 is information that can uniquely identify the private network device 110. A type of the identifier of the private network device 110 is not limited in this embodiment of this application. For example, the identifier of the private network device 110 may be a marker pre-configured for the private network device 110 in the private network 100 or a public network 200, or may be a device number of the private network device 110, or may further be an identifier allocated to the private network device 110 by the public network 200 (such as a device in the public network) or an operator according to a preset constraint rule and a generation method. Any information that can uniquely identify the private network device 110 may be used as the identifier of the private network device 110.

This embodiment of this application does not limit an occasion for the node proxy module 111 to perform step 201. For example, the node proxy module 111 may directly perform step 201 after successful networking of a private network 100A. For another example, the node proxy module 111 may also perform step 201 after determining to communicate with the public network device 210 or another private network device in the private network 100. For another example, the node proxy module 111 may also perform step 201 according to an indication of the public network 200 (such as an indication delivered by the public network device 210), for example, indicating to perform registration. For another example, the node proxy module 111 may also perform step 201 under a trigger of a user, for example, the user triggers to start a procedure of registering with the public network device 210.

In a possible implementation, before the node proxy module 111 provides the identifier of the private network device 110 and the IPv6 address of the private network device 110 to the public network device 210, the node proxy module 110 may first provide an IPv6 address revelation permission. That is, the node proxy module 110 needs to first allow revealing an IPv6 address of the node proxy module 110. The IPv6 address revelation permission may be actively provided by the node proxy module 111, or may be provided at a request of the public network device 210.

The following separately describes the two possible situations.
(1) The node proxy module 111 actively provides the IPv6 address revelation permission.

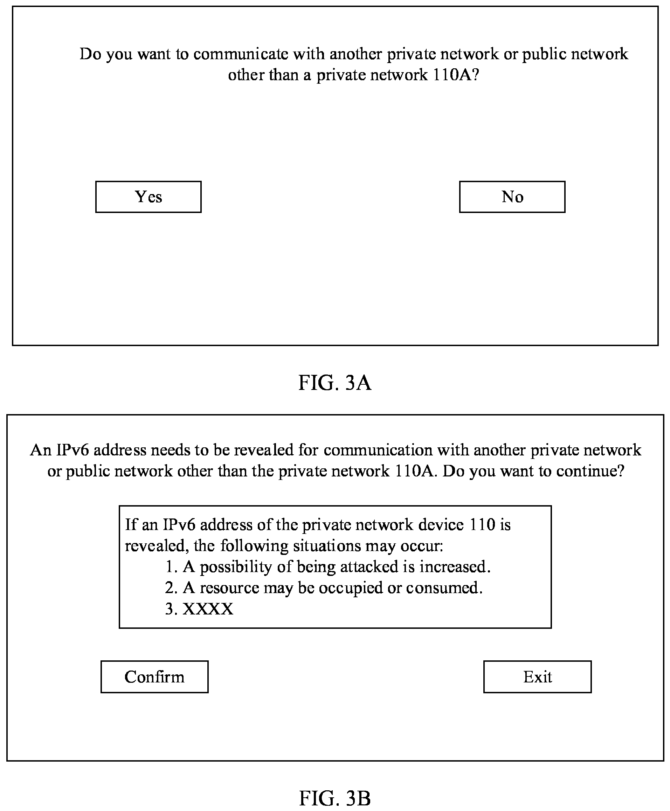

The node proxy module 111 determines to communicate with another private network or public network other than the private network 110A according to an indication of the user. For example, the private network device 110 may provide the user with a choice of communicating with another private network or public network other than the private network 110A. For example, the private network device 110 may query, by using a display interface shown in FIG. 3A, whether the user wants to communicate with another private network or public network other than the private network 110A. After the user clicks "Yes", the user determines to communicate with another private network or public network other than the private network 110A. The node proxy device 111 may further prompt, by using a display interface shown in FIG. 3B, the user whether to determine to reveal the IPv6 address of the private network device 110, and a situation to be faced caused by revealing the IPv6 address of the private network device 110. For example, a possibility of being attacked is increased, or a resource may be occupied or consumed. After clicking "Confirm", the user determines to communicate with another private network or a public network other than the private network 110A, and the IPv6 address of the private network device 110 may be revealed.

A premise for communication is that a peer in communication needs to know the IPv6 address of the private network device 110. The node proxy module 110 may send the registration request or the identifier of the private network device 110 and the IPv6 address of the private network device 110 to the public network device 210 after determining to communicate with another private network or a public network other than the private network 110A.

The IPv6 address revelation permission may be explicit information, such as indication information 1. The indication information 1 indicates to agree to reveal the IPv6 address of the private network device 110. For example, the node proxy module 111 may send the indication information 1 to the public network device 210 according to an indication of the user, and send the identifier of the private network device 110 and the IPv6 address of the private network device 110 at the same time of sending the indication information 1 or after sending the indication information 1; or the indication information 1 may be carried in the registration request. The IPv6 address revelation permission may be implicit information. For example, as long as the public network device 210 receives the registration request, or receives the identifier of the private network device 110 and the IPv6 address of the private network device 110, it indicates that the private network device 210 agrees to reveal the IPv6 address revelation permission. That is, the identifier of the private network device 110 and the IPv6 address of the private network device 110 may implicitly indicate the IPv6 address revelation permission.

When actively providing the IPv6 address revelation permission, the node proxy module 111 may further provide a preferential policy. The preferential policy is preferential fee information for the private network device, such as fee discounts or fee waivers. The node proxy module 111 may present an available preferential policy to the user. After detecting the user's selection, the node proxy module 111 may send the preferential policy selected by the user to the public network device 210.

(2) The node proxy module 111 provides the IPv6 address revelation permission at the request of the public network device 210.

The public network device 210 may send an address obtaining request to the node proxy module 111 to request the IPv6 address of the private network device. The address obtaining request may further indicate a situation to be faced after the IPv6 address is revealed.

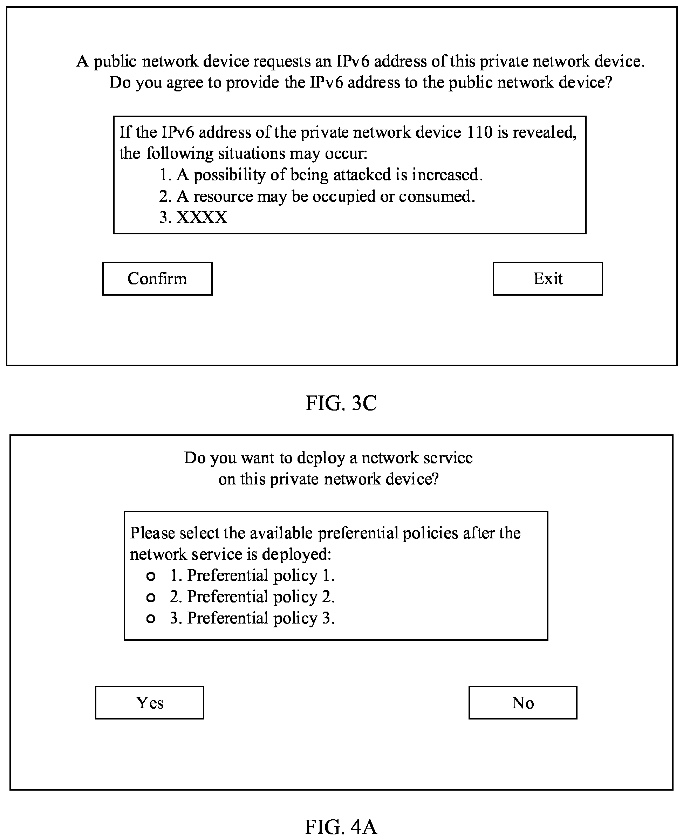

After receiving the address obtaining request, the node proxy module 111 may present a display interface shown in FIG. 3C to the user, and notify, by using the display interface, the user that the public network device requests the IPv6 address of the private network device and of a situation to be faced after the IPv6 address is revealed. After the user clicks Confirm, the node proxy module 111 determines that the user agrees to provide the IPv6 address of the private network device, and sends, to the public network device 210, the registration request or an address obtaining response that carries the identifier of the private network device 110 and the IPv6 address of the private network device 110.

The address obtaining request may further indicate a preferential policy for agreeing to reveal the IPv6 address. The node proxy module 111 may present the preferential policy to the user by using the display interface. If there are a plurality of preference policies, the user may further select the preferential policy, and the preferential policy selected by the user may be carried in the address obtaining response.

For description of the IPv6 address revelation permission, reference may be made to the foregoing content, and details are not described herein again.

It should be noted that, this embodiment of this application does not limit a manner of sending the address obtaining request by the public network device 210. For example, the address obtaining request may be a request sent by the public network device 210 to the node proxy module 111 separately, or may be address obtaining information pushed by the public network device 210 to the node proxy module 111 regularly or irregularly. The address obtaining information may be displayed on the private network device, and the user may view the information and confirm the information to provide the IPv6 address revelation permission.

Step 202: After receiving the registration request, the node management module 211 may store the identifier of the private network device 110 and the IPv6 address of the private network device 110, and establish and store a correspondence between the identifier of the private network device 110 and the IPv6 address of the private network device 110.

The node management module 211 may receive a registration request sent by any private network device connected to the public network device 210, store identifiers of all private network devices and IPv6 addresses of the private network devices, and establish and store correspondences between the identifiers of the private network devices and the IPv6 addresses of the private network devices.

In addition to sending the registration request to the node management module 211, the node proxy module 111 may further send an update request to the node management module 211 when the identifier of the private network device 110 or the IPv6 address of the private network device 110 is updated. The update request may carry an updated identifier of the private network device 110 or an updated IPv6 address of the private network device 110.

After receiving the update request, the node management module 211 may use the updated identifier of the private network device 110 or the updated IPv6 address of the private network device 110 carried in the update request to update the stored identifier of the private network device 110 or the IPv6 address of the private network device 110, and update the correspondence between the identifier of the private network device 110 and the IPv6 address of the private network device 110.

After step 201 and step 202 are performed, the private network device 110 is registered with the public network device 210, and the public network device 210 stores the correspondence between the identifier of the private network device 110 and the IPv6 address of the private network device 110. The following describes a manner of accessing the private network device 110 by using an example in which a device accessing the private network device 110 is a first client, and reference may be made to step 203 to step 206. The first client may be a public network device 210, or may be a private network device in another private network 100.

Step 203: The first client sends an address query request to an address resolution module 212, where the address query request is used to request to query the IPv6 address of the private network device 110, and the address query request includes an identifier of the home private network address.

When the first client needs to access the private network device 110, for example, the first client needs to request data from the private network device 110, or the first client needs to send data to the private network device 110, the first client needs to obtain the IPv6 address of the private network device 110 first. The IPv6 address of the private network device 110 may change. Therefore, the first client may first query the IPv6 address of the private network device 110, that is, initiate the address query request to the address resolution module 212, so as to access the private network device 110 correctly subsequently.

This embodiment of this application does not limit a manner in which the first client obtains the identifier of the private network device 110. For example, the identifier of the private network device is obtained by the first client by using a service query, or the identifier of the private network device 110 may be locally pre-stored in the first client.

Step 204: After receiving the address query request, the address resolution module 212 determines the IPv6 address of the private network device 110 based on the correspondence, stored in the node management module 211, between the identifier of the private network device and the IPv6 address of the private network device.

After receiving the address query request, the address resolution module 212 may determine the IPv6 address of the private network device 110 directly based on the correspondence, stored in the node management module 211, between the identifier of the private network device and the IPv6 address of the private network device. Alternatively, the address resolution module 212 may first verify the first client, for example, verify an identity of the first client or verify whether the first client has the permission to query the private network device 110. After the verification succeeds, the address resolution module 212 determines the IPv6 address of the private network device 110 based on the correspondence, stored in the node management module 211, between the identifier of the private network device and the IPv6 address of the private network device.

A manner in which the address resolution module 212 verifies the first client is not limited herein, and one of the manners is listed below.

The address query request may carry identity information of the first client. The identity information of the first client may be some or all of the following information: an identifier of the first client, and information about a network to which the first client belongs (such as a private network 100 or a public network to which the first client belongs).

The address resolution module 212 verifies the first client based on the identity information of the first client. For example, the address resolution module 212 may determine whether the identifier of the first client belongs to an identifier set, where the identifier set is an identifier set of devices that are allowed to access the private network device 110. If the identifier of the first client belongs to the identifier set, the verification succeeds. If the identifier of the first client does not belong to the identifier set, the verification fails. For another example, the address resolution module 212 may determine whether the network to which the first client belongs is a network that allows access to the private network device 110. If the network to which the first client belongs is a network that allows access to the private network device 110, the verification succeeds. If the network to which the first client belongs is not a network that allows access to the private network device 110, the verification fails.

If the address resolution module 212 fails to verify the first client, the address resolution module 212 may reject the address query request, for example, returning a query rejection response.

If the address resolution module 212 verifies the first client successfully, the address resolution module 212 may perform step 205 after querying the IPv6 address of the private network device 110.

Step 205: The address resolution module 212 sends an address query response to the first client, where the address query response includes the IPv6 address of the private network device 110.

Step 206: The first client accesses the private network device 110 based on the IPv6 address of the private network device 110.

When the first client needs to request data from the private network device 110, the first client may send a data request to the private network device 110. The data request is used to request data from the private network device 110, and a destination address of the data request is the IPv6 address of the private network device 110.

When the first client needs to send data to the private network device 110, the first client may send a data transmission message to the private network device 110. The data transmission message is used to transmit data to the private network device 110, and a destination address of the data transmission message is the IPv6 address of the private network device 110.

By performing step 201 to step 206, a device outside the private network 100A can interact with the private network device 110 in the private network 100A. In order to further utilize a network resource in the private network 100A such as bandwidth, the private network 100 may further deploy a network service and provide the network service for the public network device 210 or another private network 100 (such as a private network device in another private network 100). For details, reference may be made to step 207 to step 213. Step 207 to step 213 are described by using an example in which the second client publishes the network service to the public network device 210, and the third client requests the network service. The second client and the third client may be the public network device 210, or may be the private network device in another private network 100. The first client, the second client, and the third client may be a same client, or may be different clients.

Step 207: The second client sends a service deployment request to a service management module 213, where the service deployment request is used to request to deploy the network service, and the service deployment request includes a program of the network service.

A quantity of programs of the network service included in the service deployment request is not limited herein, and there may be one or more programs of the network service.

Step 208: After receiving a first service deployment request, the service management module 213 determines a private network device that can deploy the network service. A quantity of private network devices is not limited in this embodiment of this application, and there may be one or more private network devices. Herein, description is made by using an example in which a determined private network device is the private network device 110.

When determining the private network device 110 that can deploy the network service, the service management module 213 may determine, based on idle resources of all private network devices connected to the public network device 210, such as idle bandwidth and idle virtual machines of the private network devices, the private network device that needs to deploy the network service. For example, the service management module 213 may preferentially select a private network device 110 with the most idle resources as a private network device that can deploy the network service.

When determining the private network device 110 that can deploy the network service, the service management module 213 may alternatively determine performance of the private network device based on performance of all private network devices 110 connected to the public network device 210. For example, the service management module 213 may determine the performance based on an indicator, such as bandwidth (uplink bandwidth and downlink bandwidth), a central processing unit, a memory, or a disk, and a current state of the bandwidth (uplink bandwidth and downlink bandwidth), the central processing unit, the memory, or the disk, of the private network device. An indicator, such as the bandwidth (uplink bandwidth and downlink bandwidth), the central processing unit, the memory, or the disk, and a current state of the bandwidth (uplink bandwidth and downlink bandwidth), the central processing unit, the memory, or the disk, of the private network device may be reported by the private network device 110 to the service management module. For example, the service management module 213 may preferentially select a private network device 110 with optimal performance as a private network device that can deploy the network service.

It should be noted that, for one network service, the service management module 213 may alternatively determine a plurality of private network devices. That is, the plurality of private network devices is deployed with a same network service.

When the first service deployment request received by the service management module 213 includes a plurality of programs of the network service, the foregoing manner may be used to separately determine a private network device for deploying each network service. There may be one or more private network devices determined by the service management module 213. That is, the home private network device may deploy some or all of the plurality of network services.

Optionally, the service management module 213 may further decompose the network service, and the network service is decomposed into a plurality of network subservices. That is, the service management module 213 may decompose the program of the network service into programs of a plurality of network subservices.

For example, the network service is a speech recognition service, and the speech recognition service may be decomposed into three network subservices: speech noise reduction, background sound removal, and speech-to-text conversion. For another example, the network service is an image-based target recognition service, and the image-based target recognition service may be decomposed into three network subservices: extracting a feature image, selecting candidate targets based on the feature image, and identifying a target from the candidate targets.

When determining the private network device that can deploy the network service, the service management module 213 may determine a private network device that can deploy each network subservice. There may be one or more private network devices determined by the service management module 213. That is, the home private network device may deploy some or all of the plurality of network subservices.

After determining the private network device 110 that can deploy the network service, the service management module 213 may establish and store a correspondence between an identifier of the network service and the identifier of the private network device 110. If the network service is deployed in a plurality of private network devices (for example, the network service is decomposed into a plurality of network sub services, and the plurality of network subservices are deployed in the plurality of private network devices), the service management module 213 may store correspondences between the identifier of the network service and identifiers of the plurality of private network devices 110.

A specific type of the identifier of the network service is not limited in this embodiment of this application. For example, the identifier of the network service may be an identifier of an application programming interface connected to the network service, or may be a name of the network service. Any information that can identify the network service is applicable to this embodiment of this application.

If the service management module 213 further decomposes the network service, after determining the private network device that can deploy each network subservice, the service management module 213 may further establish and store a correspondence between an identifier of the network subservice and the identifier of the private network device. The identifier of the network subservice may be configured by the service management module 213, for example, may be configured based on the identifier of the network service.

For example, the identifier of the network service is AAA, the network service is decomposed into three network subservices, and the service management module 213 may configure identifiers of the network subservices to be AAA-1, AAA-2, and AAA-3 respectively.

It should be noted that the public network device 210 may store the following correspondences:
the correspondence between the identifier of the private network device and the IPv6 address of the private network device, a correspondence between the identifier of the network service and the identifier of the private network device, and a correspondence between the identifier of the network subservice and the identifier of the private network device.

To further process these correspondences, the service management module 213 may further generate a correspondence between the identifier of the network service and the IPv6 address of the private network device. If there is a further decomposition operation on the network service, the service management module 213 may further generate a correspondence between the identifier of the network subservice and the IPv6 address of the private network device. In this case, the public network device 210 may store the following correspondences: the correspondence between the identifier of the private network device and the IPv6 address of the private network device, and the correspondence between the identifier of the network service and the IPv6 address of the private network device. If there is a further decomposition operation on the network service, the public network device 210 may further store the correspondence between the identifier of the network subservice and the IPv6 address of the private network device, or may only store the correspondence between the identifier of the private network device and the IPv6 address of the private network device and the correspondence between the identifier of the network subservice and the IPv6 address of the private network device.

Step 209: The service management module 213 sends a service deployment instruction to the private network device 110, where the service deployment instruction includes a program of the network service.

It should be noted that, before performing step 209, the service management module 213 may further obtain a network service deployment permission of the private network device 110 in advance. The following lists several manners of obtaining the network service deployment permission.

Manner 1: The private network device 110 may sign an agreement in advance which agrees to deploy the network service on the private network device 110, and information about the agreement signed by the private network device 110 may be pre-stored in the public network device 210. The service management module 213 may determine, according to the agreement, that the private network device 110 agrees to deploy the network service. That is, the network service deployment permission of the private network device 110 is obtained.

Manner 2: The private network device 110 (a service proxy module 112112) actively provides the network service deployment permission.

The service proxy module 112 may determine, according to an indication of the user, that the user is allowed to occupy a resource of the private network device 110 to deploy the network service. For example, the private network device 110 may provide the user with a choice of deploying the network service. For example, the private network device 110 may query, by using a display interface shown in FIG. 4A, the user whether to deploy the network service, and agree to a preferential policy for allowing the request after the network service is deployed. The preferential policy may be preferential fee information for a private network device, for example, rental cost reduction, rental discounts, and service fee discounts.

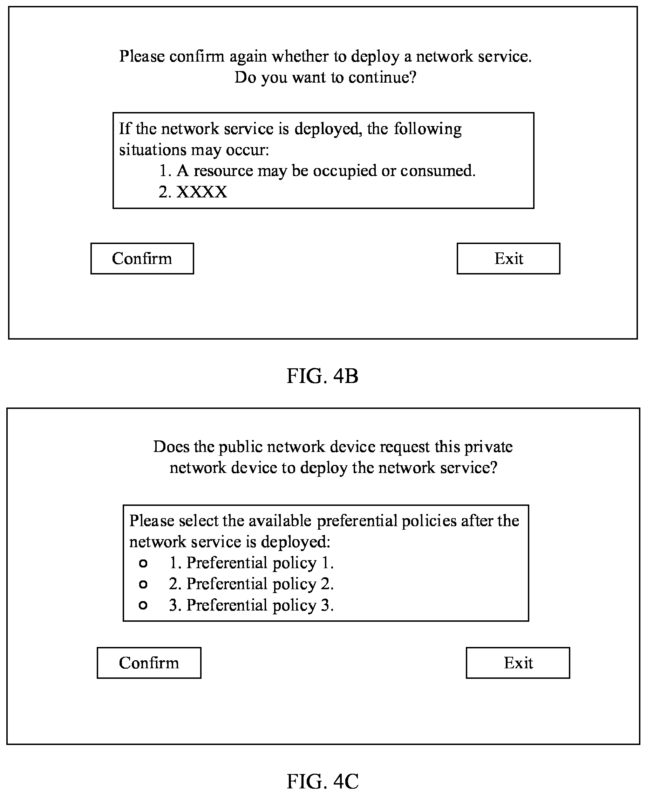

After the user clicks "Yes" and selects a preferential policy, it is determined that the network service can be deployed on the private network device 110 and a preferential policy selected by the user is determined. Further, the node proxy device 111 may further prompt, by using a display interface shown in FIG. 4B, the user whether to determine to deploy the network service, and a situation to be faced after the network service is deployed. For example, a resource may be occupied or consumed. After the user clicks "Confirm", a resource occupation permission is sent to the public network device, and the preferential policy selected by the user may further be sent. The resource occupation permission indicates that it is allowed to occupy a resource of the private network device to deploy the network service, and the resource occupation permission may be understood as another representation form of the network service deployment permission.

The resource occupation permission and the network service deployment permission may be explicit information, such as indication information 2. The indication information 2 indicates to agree to deploy the network service. For example, the service proxy module 112 may send the indication information 2 to the public network device 210 according to an indication of the user. The IPv6 address revelation permission may be implicit information. For example, when step 209 is performed, after the service management module 213 sends the service deployment instruction to the private network device 110, the service proxy module 112 sends a successful service deployment response, indicating that the network service is successfully deployed, and it indicates that the private network device 110 agrees to deploy the network service or allows occupying a resource of the private network device 110.

Manner 3: The service management module 213 may request the network service deployment permission from the private network device 110 (the service proxy module 112).

The service management module 213 may send a second service deployment request to the service proxy module 112, to request to deploy the network service. The second service deployment request may further indicate a situation to be faced after the network service is deployed. For example, a resource may be occupied or consumed. The second service deployment request may further carry one or more preference policies, and the preferential policy may be preferential fee information for a private network device, for example, rental cost reduction, rental discount, or service fee discount.

After receiving the second service deployment request, the service proxy module 112 may present a display interface shown in FIG. 4C to the user, and notify, by using the display interface, the user that the public network device requests to deploy the network service on the private network device, and may further notify the user of a situation to be faced after the network service is deployed, and that the service deployment request may further carry one or more preferential policies.

After the user clicks "Confirm" and selects a preferential policy (corresponding to a case in which a plurality of preferential policies are available for selection by the user), the service proxy module 112 determines that the user agrees to deploy the network service on the private network device, and sends a service deployment response to the public network device 210. The service deployment response is used to agree to deploy the network service, and the service deployment response may be understood as a representation form of the network service deployment permission. If the user selects a preferential policy, the service deployment response may further carry the preferential policy selected by the user.

It should be noted that, this embodiment of this application does not limit a manner of sending the second service deployment request by the public network device 210. For example, the second service deployment request may be a request sent by the public network device 210 to the node proxy module 111 separately, or may be service deployment information pushed by the public network device 210 to the node proxy module 111 regularly or irregularly. The information may notify the user of whether to agree to deploy the network service, and may further include the plurality of preferential policies. The service deployment information may be displayed on the private network device, and the user may view the information and confirm the information to provide the network service deployment permission.

Step 210: After receiving the service deployment instruction, the service proxy module 112 in the private network device 110 obtains the program of the network service from the service deployment instruction, and runs the network service, that is, installs the program of the network service.

It should be noted that, in step 209 and step 210, a program carried in the service deployment instruction is the program of the network service. In actual application, if the service management module 213 further decomposes the network service and determines that one or more network subservices need to be deployed in the home private network device 110, the service deployment instruction carries the program of the one or more network subservices.

It should be noted that, when a network service is decomposed into a plurality of network subservices, and the plurality of network subservices are deployed in a plurality of private network devices, for any private network device in the plurality of private network devices, the private network device may store an IPv6 address of a private network device other than the private network device in the plurality of private network devices. For example, the IPv6 address of the private network device stored in the private network device may be an IPv6 address of a private network device where a network subservice is located, where the network subservice performs further processing on data generated by the private network device during running of the network subservice.

In addition to determining the private network device 110 that can deploy the network service or the network subservice, the service management module 213 may further update the network service deployed in the private network device 110.

There are many scenarios for updating the network service deployed in the private network device 110, some of which are listed below:

### Scenario 1: Modify the program of the network service.

When determining that the program of the network service needs to be modified, the service management module 213 may send a first service update instruction to the private network device 110 that deploys the network service, where the first service update instruction carries a modified program of the network service.

After receiving the first service update instruction, the service proxy module 112 in the private network device 110 obtains the modified program of the network service from the first service update instruction, and installs the modified program of the network service.

There are many cases in which the service management module 213 determines that the program of the network service needs to be modified. For example, the second client may send a service update request, where the service update request carries the identifier of the network service and the modified program of the network service. After receiving the service update request, the service management module 213 determines that the program of the network service needs to be modified. For another example, the user may perform an operation on the public network device 210 to trigger a program modification procedure of the network service. For example, the public network device 210 may provide a specific user with a permission of viewing and modifying the program of the network service. After viewing the program of the network service by using the public network device 210, the specific user may modify the program of the network service. After detecting a modification operation performed by the user on the program of the network service, the service management module 213 may determine that the program of the network service needs to be modified.

### Scenario 2: Delete the network service deployed in the private network device 110.

When determining that the network service does not need to be deployed on the private network device 110, the service management module 213 may send a second service update instruction to the private network device 110 deployed with the network service, where the second service update instruction indicates to uninstall the network service.

After receiving the second service update instruction, the service proxy module 112 in the private network device 110 deletes a locally installed program of the network service.

There are many cases in which the service management module 213 determines that the network service does not need to be deployed on the private network device 110. For example, the second client may send a service suspension request, where the service suspension request carries the identifier of the network service, and the service suspension request indicates to suspend the network service. After receiving the service suspension request, the service management module 213 determines that the network service does not need to be deployed on the private network device 110. For another example, when learning that some components in the private network device 110 currently deployed with the network service are faulty or have a security risk, the service management module 213 may determine that the network service does not need to be deployed on the private network device 110. For another example, the user may perform an operation on the public network device 210 to trigger a program deletion procedure of the network service. For example, the public network device 210 may provide a specific user with a permission to view and delete the program of the network service. After viewing the program of the network service by using the public network device 210, the specific user may delete the program of the network service. After detecting a deletion operation performed by the user on the program of the network service, the service management module 213 may determine that the network service does not need to be deployed.

The service management module 213 may further delete the correspondence between the identifier of the network service and the identifier (or the IPv6 address) of the private network device 110.

### Scenario 3: Migrate the network service deployed in the private network device 110.

When determining to migrate the network service deployed in the private network device 110, the service management module 213 determines a target private network device that needs to deploy the network service. A private network device 110 currently deployed with the network service is a source private network device. The service management module 213 may send the second service update instruction to the source private network device, and send a third service update instruction to the target private network device, where the third service update instruction carries the program of the network service.

An operation of receiving the second service update instruction by the source private network device is similar to that of receiving the second service update instruction by the private network device 110 in the scenario 3. For details, reference may be made to the foregoing description, and details are not described herein again. An operation performed by the target private network device after receiving the third service update instruction is similar to that performed by the private network device 110 after receiving the service deployment instruction in step 210. For details, refer to the foregoing description, and details are not described herein again.

There are many cases in which the service management module 213 determines to migrate the network service deployed in the private network device 110. For example, when learning that some components in the private network device 110 currently deployed with the network service are faulty or have a security risk, the service management module 213 may determine that the network service needs to be migrated. For another example, the user may perform an operation on the public network device 210 to trigger a migration procedure of the network service. For example, the public network device 210 may provide a specific user with a permission to view and modify a deployment location of the network service. After viewing the program of the network service by using the public network device 210, the specific user may modify the deployment location of the network service. After detecting a modification operation performed by the user on the deployment location of the network service, the service management module 213 may determine that the network service needs to be migrated.

The service management module 213 may further update the correspondence between the identifier of the network service and the identifier (or the IPv6 address) of the private network device 110. The identifier or the IPv6 address of the private network device 110 is updated to an identifier or an IPv6 address of the target private network device.

Step 211: The third client sends a service query request to the address resolution module 212, where the service query request is used to request to query the IPv6 address of the private network device 110 providing the network service, and the address query request includes the identifier of the network service.

When the third client obtains the network service, the third client needs to first obtain the IPv6 address of the private network device 110 deployed with the network service. The IPv6 address of the private network device 110 may change. Therefore, the third client may first query the IPv6 address of the private network device 110, that is, initiate the service query request to the address resolution module 212, so as to access the private network device 110 correctly subsequently and obtain the network service provided by the private network device 110.

Step 212: After receiving the service query request, the address resolution module 212 may send a service query response to the third client based on the service query request, where the service query response includes the IPv6 address of the private network device 110.

After receiving the service query request, the address resolution module 212 may determine, based on the locally stored correspondence and based on the identifier of the network service, the IPv6 address of the private network device 110 deployed with the network service, carry the IPv6 address in the service query response, and send the service query response to the third client.

It should be noted that, if the network service is deployed on a plurality of private network devices, the address resolution module 212 may select a private network device, and send the service query response to the third client, where the service query response may carry an IPv6 address of the selected private network device. Alternatively, a service query response that carries IPv6 addresses of the plurality of private network devices may be sent to the third client, so that the third client selects one or more private network devices to provide the network service.

If the network service is decomposed into a plurality of network subservices deployed on the plurality of private network devices, the address resolution module 212 sends the service query response to the third client, where the service query response may carry an IPv6 address of a private network device where a network subservice running first among the plurality of private network devices is located, and the service query response may further indicate the plurality of private network devices to cooperate to provide the network service. The service query response may also carry IPv6 addresses of the plurality of private network devices, and the service query response may further indicate the plurality of private network devices to cooperate to provide the network service.

Step 213: The third client requests, based on the IPv6 address of the private network device 110, the private network device 110 to provide the network service.

The third client requests the speech recognition service, and the third client may initiate, to the private network device 110, a service request for which a destination address is the IPv6 address of the private network device 110 and a source address is an IPv6 address of the third client, where the service request includes to-be-recognized speech data.

After receiving the service request, the private network device 110 may perform speech recognition on the to-be-recognized speech data, and returning text information obtained after the speech recognition to the third client.

It should be noted that, if the network service is decomposed into a plurality of network subservices, and the plurality of network subservices are deployed on the plurality of private network devices, if the service query response carries an IPv6 address of a private network device where a network subservice running first among the plurality of private network devices is located, and the third client obtains the IPv6 address of the private network device 110 where the network subservice running first is located, the third client may initiate the service request to the private network device 110, where the service request may indicate to request the speech recognition service. After receiving the service request, the private network device 110 runs the network subservice based on the to-be-recognized speech data, and then transmits data generated by the network subservice and the IPv6 address of the third client to a private network device where a network subservice performing next processing is located, until the data is transmitted to a private network device where the network subservice running last in the network service is located. After operation of the private network device where the network subservice running last is located, text information obtained after the speech recognition may be returned to the third client based on the IPv6 address of the third client.

If the service query response carries the IPv6 addresses of the plurality of private network devices, after the third client obtains the IPv6 addresses of the plurality of private network devices, the third client may initiate the service request to each private network device in sequence, so as to request the network subservices deployed in the plurality of private network devices respectively.

In this embodiment shown in FIG. 2, the private network device 110 first provides the IPv6 address and the identifier of the private network device 110, and then deploys the network service according to an indication of the public network device 210. In actual application, the private network device 110 may also directly deploy the network service according to an indication of the public network device 210. In this way, the private network device may provide only the IPv6 address of the private network device 110, and the public network device 210 may store the correspondence between the identifier of the network service and the IPv6 address of the private network device 110.

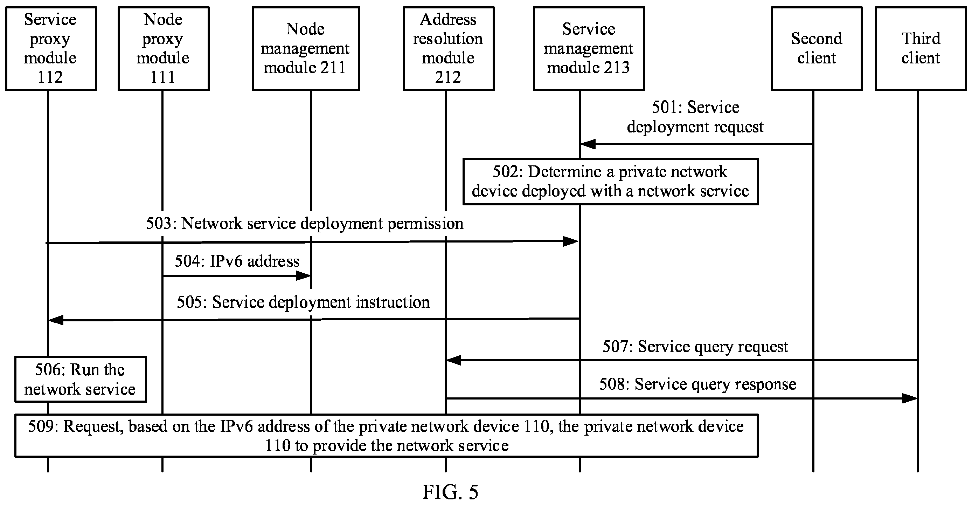

FIG. 5 shows a network interworking method based on a private network according to an embodiment of this application. The method includes the following steps.

Step 501: A second client sends a service deployment request to a service management module 213, where the service deployment request is used to request to deploy the network service, and the service deployment request includes a program of the network service. This step is the same as step 207. For details, reference may be made to related description in step 207, and details are not described herein again.

Step 502: After receiving a first service deployment request, the service management module 213 determines a private network device that can deploy the network service.

Step 503: The service management module 213 obtains a network service deployment permission from a service proxy module 112 in a private network device 110.

For a manner of obtaining the network service deployment permission by the service management module 213, reference may be made to related description in step 209, and details are not described herein again.

Step 504: A node management module 211 obtains an IPv6 address of the private network device 110 from a node proxy module 111.

It should be noted that the IPv6 address of the private network device 110 may be actively provided by the node proxy module 111 to the node management module 211 when or after the service proxy module 112 sends the network service deployment permission to the service management module 213, or may be provided by the node proxy module 111 at a request of the node management module 211. For example, the node management module 211 sends an address obtaining request to the node proxy module 111, to request the IPv6 address of the private network device 110. Then, the node proxy module 111 sends a node obtaining response carrying the IPv6 address of the private network device 110 to the node management module 212.

The service management module 213 may further record a correspondence between an identifier of the network service and an IPv6 address of the private network device.

Step 505: The service management module 213 indicates the service proxy module 112 in the private network device 110 to deploy the network service. For example, the service management module 213 may send a service deployment instruction to the service proxy module 112, where the service deployment instruction includes the program of the network service. For details, reference may be made to related description of step 209, and details are not described herein again.

Step 506: After receiving the service deployment instruction, the service proxy module 112 in the private network device 110 obtains the program of the network service from the service deployment instruction, and runs the network service, that is, installs the program of the network service. For details, reference may be made to related description of step 210, and details are not described herein again.

For a manner and a scenario in which the service management module 213 updates the network service deployed in the private network device 110, reference may be made to the foregoing description, and details are not described herein again.

Step 507: A third client sends a service query request to an address resolution module 212, where the service query request is used to request to query the IPv6 address of the private network device 110 providing the network service, and the address query request includes the identifier of the network service. For details, reference may be made to related description of step 211, and details are not described herein again.

Step 508: After receiving the service query request, the address resolution module 212 may send a service query response to the third client based on the service query request, where the service query response includes the IPv6 address of the private network device 110. For details, reference may be made to related description of step 212, and details are not described herein again.

Step 509: The third client requests, based on the IPv6 address of the private network device 110, the private network device 110 to provide the network service. For details, reference may be made to related description of step 213, and details are not described herein again.

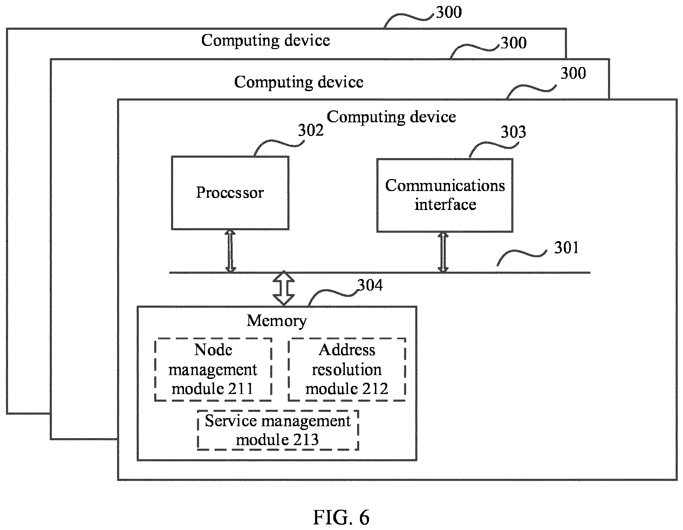

The following describes a system architecture applicable to an embodiment of this application. FIG. 6 shows a computer cluster according to an embodiment of this application. The computer cluster includes at least one computing device 300, and a communication channel is established between computing devices 300 through a communications network.

Each computing device 300 includes a bus 301, a processor 302, a communications interface 303, and a memory 304. The processor 302, the memory 304, and the communications interface 303 communicate with each other through the bus 301.

The processor 302 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 304 may include a volatile memory (volatile memory), for example, a random access memory (random access memory, RAM). The memory 304 may further include a non-volatile memory (non-volatile memory, NVM), for example, a read-only memory (read-only memory, ROM), a flash memory, a hard disk drive (hard disk drive, HDD), or a solid-state drive (solid-state drive, SSD). The memory 304 may further include a combination of the foregoing types.

The memory 304 stores executable code. The processor 302 may read the executable code in the memory 304 to implement a function, and may further communicate with another computing device by using the communications interface 303.

In this embodiment of this application, the processor 302 may implement functions of one or more modules (for example, one or more modules of a node management module 211, an address resolution module 212, and a service management module 213) of a public network device 210. In this case, the memory 304 stores one or more modules (for example, one or more modules of the node management module 211, the address resolution module 212, and the service management module 213) of the public network device 210.

In this embodiment of this application, processors 301 in a plurality of computing devices 300 may work in coordination, to perform a method performed by a public network device in a network interworking method based on a private network according to this embodiment of this application.

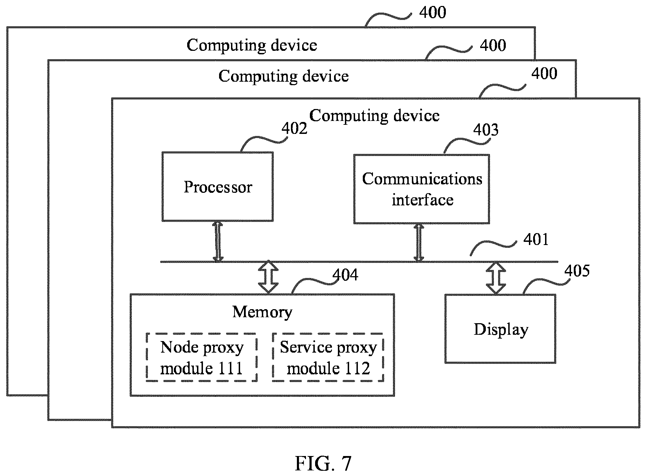

The following describes a system architecture applicable to an embodiment of this application. FIG. 7 shows a computer cluster according to an embodiment of this application. The computer cluster includes at least one computing device 400, and a communication channel is established between computing devices 400 through a communications network.

Each computing device 400 includes a bus 401, a processor 402, a communications interface 403, and a memory 404. Optionally, the computing device 40 may further include a display 405. The processor 402, the memory 404, and the communications interface 403 communicate with each other through the bus 401.

For description of the processor 402 and the memory 404, reference may be made to description of the processor 302 and the memory 304, and details are not described herein again.

The memory 404 stores executable code. The processor 402 may read the executable code in the memory 404 to implement a function, and may further communicate with another computing device by using the communications interface 403. The processor 402 may further trigger the display 405 to display information to the user, for example, information included in the interfaces shown in FIG. 3A to FIG. 3C and FIG. 4A to FIG. 4C in the embodiments of this application.

In this embodiment of this application, the processor 402 may implement functions of one or more modules (for example, one or more modules of a node proxy module 111 and a service proxy module 112) of a private network device 110. In this case, the memory 404 stores one or more modules (for example, one or more modules of the node proxy module 111 and the service proxy module 112) of the private network device 110.

In this embodiment of this application, processors 401 in a plurality of computing devices 400 may work in coordination, to perform a method performed by a private network device in a network interworking method based on a private network according to this embodiment of this application.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of the present invention. Any variation or replacement figured out by a person skilled in the art based on the specific implementations provided in the present invention shall fall within the protection scope of the present invention.

## Claims

1. A network interworking method based on utilizing unused bandwidth resources in a private network, wherein the method is applied to a device deployed in a public network and comprises:
after obtaining (503) a network service deployment permission from a private network device, indicating (505) the private network device to deploy a network service, and recording (504) an internet protocol version 6, IPv6 address of the private network device deployed with the network service;
receiving (507) a service query request from a client, wherein the service query request is used to request the IPv6 address of the private network device deployed with the network service; and
providing (508) the IPv6 address of the private network device with the network service to the client.

2. The method according to claim 1, wherein the obtaining a network service deployment permission from a private network device comprises:
sending a service deployment request to the private network device, wherein the service deployment request is used to request to deploy the network service; and
receiving a service deployment response from the private network device, wherein the service deployment response is used to agree to deploy the network service.

3. The method according to claim 2, wherein the service deployment request is further used to indicate a first preferential policy, and the first preferential policy is preferential fee information for the private network device that is provided to the private network device.

4. The method according to claim 1, wherein the obtaining a network service deployment permission from a private network device comprises:
receiving a resource occupation permission of the private network device, wherein the resource occupation permission is used to indicate that it is allowed to occupy a resource of the private network device to deploy the network service.

5. The method according to claim 4, wherein the resource occupation permission further comprises a second preferential policy, and the second preferential policy is preferential fee information for the private network device that is proposed by the private network device.

6. The method according to any one of claims 1 to 5, wherein the method further comprises:
indicating the private network device to update the network service.

7. The method according to any one of claims 1 to 5, wherein the method further comprises:
receiving an updated IPv6 address of the private network device from the private network device, and updating a locally stored IPv6 address of the private network device.

8. A network interworking method based on utilizing unused bandwidth resources in a private network, wherein the method is applied to a private network device in a private network and comprises:
providing (503) a network service deployment permission to a device in a public network;
deploying (505) a network service according to an indication of the device in the public network, and sending an IPv6 address of the private network device to the device in the public network;
receiving a service request from a client, wherein the service request is used to request the network service; and
returning a service response based on the service request.

9. The method according to claim 8, wherein the providing a network service deployment permission to a device in a public network comprises:
receiving a service deployment request from the device in the public network, wherein the service deployment request is used to request to deploy the network service; and
sending a service deployment response to the device in the public network, wherein the service deployment response is used to agree to deploy the network service.

10. The method according to claim 9, wherein the service deployment request is further used to indicate a first preferential policy, and the first preferential policy is preferential fee information for the private network device that is provided to the private network device.

11. The method according to claim 8, wherein the providing a network service deployment permission to a device in a public network comprises:
sending a resource occupation permission to the device in the public network, wherein the resource occupation permission is used to indicate that it is allowed to occupy a resource of the private network device to deploy the network service.

12. The method according to claim 11, wherein the resource occupation permission further comprises a second preferential policy, and the second preferential policy is preferential fee information for the private network device that is proposed by the private network device.

13. The method according to any one of claims 8 to 12, wherein the method further comprises:
updating the network service according to an indication of the device in the public network.

14. A public network device, wherein the public network device is deployed in a public network and comprises:
a node management module (211), configured to obtain an IPv6 address of a private network device;
a service management module (213), configured to: after obtaining a network service deployment permission from the private network device, indicate the private network device to deploy a network service; and record an IPv6 address of the private network device deployed with the network service; and
an address resolution module (212), configured to: receive a service query request from a client, wherein the service query request is used to request the IPv6 address of the private network device deployed with the network service; and provide the IPv6 address of the private network device with the network service to the client.

15. A private network device, wherein the private network device is deployed in a private network and comprises:
a service proxy module (112), configured to: provide a network service deployment permission to a device in a public network; and deploy a network service according to an indication of the device in the public network; and
a node proxy module (111), configured to send an IPv6 address of the private network device to the device in the public network, wherein
the service proxy module (112) is further configured to: receive a service request from a client, wherein the service request is used to request the network service; and return a service response based on the service request.

## Patentansprüche

1. Netzwerk-Interworking-Verfahren basierend auf einem Nutzen nicht verwendeter Bandbreitenressourcen in einem privaten Netzwerk, wobei das Verfahren auf eine Vorrichtung, die in einem öffentlichen Netzwerk bereitgestellt wird, angewendet wird und umfasst:
nach einem Erhalten (503) einer Netzwerkdienstbereitstellungsberechtigung von einer Vorrichtung des privaten Netzwerks, Anzeigen (505) der Vorrichtung des privaten Netzwerks, einen Netzwerkdienst bereitzustellen und Aufzeichnen (504) einer Internetprotokollversion 6(IPv6)-Adresse der Vorrichtung des privaten Netzwerks, die mit dem Netzwerkdienst bereitgestellt wird;
Empfangen (507) einer Dienstabfrageanforderung von einem Client, wobei die Dienstabfrageanforderung verwendet wird, um die IPv6-Adresse der Vorrichtung des privaten Netzwerks, die mit dem Netzwerkdienst bereitgestellt wird, anzufordern; und Anbieten (508) der IPv6-Adresse der Vorrichtung des privaten Netzwerks mit dem Netzwerkdienst an den Client.

2. Verfahren nach Anspruch 1, wobei das Erhalten einer
Netzwerkdienstbereitstellungsberechtigung von einer Vorrichtung des privaten Netzwerks umfasst:
Senden einer Dienstbereitstellungsanforderung an die Vorrichtung des privaten Netzwerks, wobei die Dienstbereitstellungsanforderung verwendet wird, um anzufordern, den Netzwerkdienst bereitzustellen; und
Empfangen einer Dienstbereitstellungsantwort von der Vorrichtung des privaten Netzwerks, wobei die Dienstbereitstellungsantwort verwendet wird, um zuzustimmen, den Netzwerkdienst bereitzustellen.

3. Verfahren nach Anspruch 2, wobei die Dienstbereitstellungsanforderung ferner verwendet wird, um eine erste Vorzugsrichtlinie anzuzeigen, und die erste Vorzugsrichtlinie Vorzugsgebühreninformationen für die Vorrichtung des privaten Netzwerks, die der Vorrichtung des privaten Netzwerks angeboten wird, ist.

4. Verfahren nach Anspruch 1, wobei das Erhalten einer Netzwerkdienstbereitstellungsberechtigung von einer Vorrichtung des privaten Netzwerks umfasst:
Empfangen einer Ressourcenbelegungsberechtigung der Vorrichtung des privaten Netzwerks, wobei die Ressourcenbelegungsberechtigung verwendet wird, um anzuzeigen, dass es erlaubt ist, eine Ressource der Vorrichtung des privaten Netzwerks zu belegen, um den Netzwerkdienst bereitzustellen.

5. Verfahren nach Anspruch 4, wobei die Ressourcenbelegungsberechtigung ferner eine zweite Vorzugsrichtlinie umfasst, und die zweite Vorzugsrichtlinie Vorzugsgebühreninformationen für die Vorrichtung des privaten Netzwerks, die von der Vorrichtung des privaten Netzwerks vorgeschlagen wird, ist.

6. Verfahren nach einem der Ansprüche 1 bis 5, wobei das Verfahren ferner umfasst: Anzeigen der Vorrichtung des privaten Netzwerks, den Netzwerkdienst zu aktualisieren.

7. Verfahren nach einem der Ansprüche 1 bis 5, wobei das Verfahren ferner umfasst: Empfangen einer aktualisierten IPv6-Adresse der Vorrichtung des privaten Netzwerks von der Vorrichtung des privaten Netzwerks und Aktualisieren einer lokal gespeicherten IPv6-Adresse der Vorrichtung des privaten Netzwerks.

8. Netzwerk-Interworking-Verfahren basierend auf dem Nutzen nicht verwendeter Bandbreitenressourcen in einem privaten Netzwerk, wobei das Verfahren auf eine Vorrichtung des privaten Netzwerks in einem privaten Netzwerk angewendet wird und umfasst:
Anbieten (503) einer Netzwerkdienstbereitstellungsberechtigung an eine Vorrichtung in einem öffentlichen Netzwerk;
Bereitstellen (505) eines Netzwerkdienstes gemäß einer Anzeige der Vorrichtung in dem öffentlichen Netzwerk und Senden einer IPv6-Adresse der Vorrichtung des privaten Netzwerks an die Vorrichtung in dem öffentlichen Netzwerk;
Empfangen einer Dienstanforderung von einem Client, wobei die Dienstanforderung verwendet wird, um einen Netzwerkdienst anzufordern; und
Zurückgeben einer Dienstantwort basierend auf der Dienstanforderung.

9. Verfahren nach Anspruch 8, wobei das Anbieten einer
Netzwerkdienstbereitstellungsberechtigung an eine Vorrichtung in einem öffentlichen Netzwerk umfasst:
Empfangen einer Dienstbereitstellungsanforderung von der Vorrichtung in dem öffentlichen Netzwerk, wobei die Dienstbereitstellungsanforderung verwendet wird, um anzufordern, den Netzwerkdienst bereitzustellen; und
Senden einer Dienstbereitstellungsantwort an die Vorrichtung in dem öffentlichen Netzwerk, wobei die Dienstbereitstellungsantwort verwendet wird, um zuzustimmen, den Netzwerkdienst bereitzustellen.

10. Verfahren nach Anspruch 9, wobei die Dienstbereitstellungsanforderung ferner verwendet wird, um eine erste Vorzugsrichtlinie anzuzeigen, und die erste Vorzugsrichtlinie Vorzugsgebühreninformationen für die Vorrichtung des privaten Netzwerks, die der Vorrichtung des privaten Netzwerks angeboten wird, ist.

11. Verfahren nach Anspruch 8, wobei das Anbieten einer
Netzwerkdienstbereitstellungsberechtigung an eine Vorrichtung in einem öffentlichen Netzwerk umfasst:
Senden einer Ressourcenbelegungsberechtigung an die Vorrichtung in dem öffentlichen Netzwerk, wobei die Ressourcenbelegungsberechtigung verwendet wird, um anzuzeigen, dass es erlaubt ist, eine Ressource der Vorrichtung des privaten Netzwerks zu belegen, um den Netzwerkdienst bereitzustellen.

12. Verfahren nach Anspruch 11, wobei die Ressourcenbelegungsberechtigung ferner eine zweite Vorzugsrichtlinie umfasst, und die zweite Vorzugsrichtlinie Vorzugsgebühreninformationen für die Vorrichtung des privaten Netzwerks, die von der Vorrichtung des privaten Netzwerks vorgeschlagen wird, ist.

13. Verfahren nach einem der Ansprüche 8 bis 12, wobei das Verfahren ferner umfasst: Aktualisieren des Netzwerkdienstes gemäß einer Anzeige der Vorrichtung in dem öffentlichen Netzwerk.

14. Vorrichtung des öffentlichen Netzwerks, wobei die Vorrichtung des öffentlichen Netzwerks in einem öffentlichen Netzwerk bereitgestellt wird und umfasst:
ein Knotenverwaltungsmodul (211), das konfiguriert ist, um eine IPv6-Adresse einer Vorrichtung des privaten Netzwerks zu erhalten;
ein Dienstverwaltungsmodul (213), das konfiguriert ist zum: nach dem Erhalten einer Netzwerkdienstbereitstellungsberechtigung von der Vorrichtung des privaten Netzwerks, Anzeigen der Vorrichtung des privaten Netzwerks, einen Netzwerkdienst bereitzustellen; und Aufzeichnen einer IPv6-Adresse der Vorrichtung des privaten Netzwerks, die mit dem Netzwerkdienst bereitgestellt wird; und
ein Adressauflösungsmodul (212), das konfiguriert ist zum: Empfangen einer Dienstabfrageanforderung von einem Client, wobei die Dienstabfrageanforderung verwendet wird, um die IPv6-Adresse der Vorrichtung des privaten Netzwerks, die mit dem Netzwerkdienst bereitgestellt wird, anzufordern; und Anbieten der IPv6-Adresse der Vorrichtung des privaten Netzwerks mit dem Netzwerkdienst an den Client.

15. Vorrichtung des privaten Netzwerks, wobei die Vorrichtung des privaten Netzwerks in einem privaten Netzwerk bereitgestellt wird und umfasst:
ein Dienst-Proxy-Modul (112), das konfiguriert ist zum: Anbieten einer Netzwerkdienstbereitstellungsberechtigung an eine Vorrichtung in einem öffentlichen Netzwerk; und Bereitstellen eines Netzwerkdienstes gemäß einer Anzeige der Vorrichtung in dem öffentlichen Netzwerk; und
ein Knoten-Proxy-Modul (111), das konfiguriert ist, um eine IPv6-Adresse der Vorrichtung des privaten Netzwerks an die Vorrichtung in dem öffentlichen Netzwerk zu senden, wobei das Dienst-Proxy-Modul (112) ferner konfiguriert ist zum: Empfangen einer Dienstanforderung von einem Client, wobei die Dienstanforderung verwendet wird, um den Netzwerkdienst anzufordern; und Zurückgeben einer Dienstantwort basierend auf der Dienstanforderung.

## Revendications

1. Procédé d'interfonctionnement de réseaux basé sur l'utilisation de ressources de largeur de bande inutilisées dans un réseau privé, dans lequel le procédé est appliqué à un dispositif déployé dans un réseau public et comprend :
après l'obtention (503) d'une autorisation de déploiement de service réseau à partir d'un dispositif de réseau privé, l'indication (505) au dispositif de réseau privé de déployer un service réseau, et l'enregistrement (504) d'une adresse de protocole Internet version 6, IPv6, du dispositif de réseau privé déployé avec le service réseau ;
la réception (507) d'une demande de requête de service en provenance d'un client, dans lequel la demande de requête de service est utilisée pour demander l'adresse IPv6 du dispositif de réseau privé déployé avec le service réseau ; et
la fourniture (508) de l'adresse IPv6 du dispositif de réseau privé avec le service réseau au client.

2. Procédé selon la revendication 1, dans lequel l'obtention d'une autorisation de déploiement de service réseau à partir d'un dispositif de réseau privé comprend :
l'envoi d'une demande de déploiement de service vers le dispositif de réseau privé, dans lequel la demande de déploiement de service est utilisée pour demander le déploiement du service réseau ; et
la réception d'une réponse de déploiement de service provenant du dispositif de réseau privé, dans lequel la réponse de déploiement de service est utilisée pour accepter le déploiement du service réseau.

3. Procédé selon la revendication 2, dans lequel la demande de déploiement de service est en outre utilisée pour indiquer une première politique préférentielle, et la première politique préférentielle est un élément d'information de frais préférentiels pour le dispositif de réseau privé qui est fourni au dispositif de réseau privé.

4. Procédé selon la revendication 1, dans lequel l'obtention d'une autorisation de déploiement de service réseau à partir d'un dispositif de réseau privé comprend : la réception d'une autorisation d'occupation de ressources du dispositif de réseau privé, dans lequel l'autorisation d'occupation de ressources est utilisée pour indiquer qu'il est autorisé à occuper une ressource du dispositif de réseau privé pour déployer le service réseau.

5. Procédé selon la revendication 4, dans lequel l'autorisation d'occupation de ressources comprend en outre une seconde politique préférentielle, et la seconde politique préférentielle est un élément d'information de frais préférentiels pour le dispositif de réseau privé qui est proposé par le dispositif de réseau privé.

6. Procédé selon l'une quelconque des revendications 1 à 5, dans lequel le procédé comprend en outre :
l'indication au dispositif de réseau privé de mettre à jour le service réseau.

7. Procédé selon l'une quelconque des revendications 1 à 5, dans lequel le procédé comprend en outre :
la réception d'une adresse IPv6 mise à jour du dispositif de réseau privé provenant du dispositif de réseau privé, et la mise à jour d'une adresse IPv6 stockée localement du dispositif de réseau privé.

8. Procédé d'interfonctionnement de réseaux basé sur l'utilisation de ressources de largeur de bande inutilisées dans un réseau privé, dans lequel le procédé est appliqué à un dispositif de réseau privé dans un réseau privé et comprend :
la fourniture (503) d'une autorisation de déploiement de service réseau à un dispositif dans un réseau public ;
le déploiement (505) d'un service réseau selon une indication du dispositif dans le réseau public, et l'envoi d'une adresse IPv6 du dispositif de réseau privé vers le dispositif dans le réseau public ;
la réception d'une demande de service provenant d'un client, dans lequel la demande de service est utilisée pour demander le service réseau ; et le renvoi d'une réponse de service sur la base de la demande de service.

9. Procédé selon la revendication 8, dans lequel la fourniture d'une autorisation de déploiement de service réseau à un dispositif dans un réseau public comprend :
la réception d'une demande de déploiement de service provenant du dispositif dans le réseau public, dans lequel la demande de déploiement de service est utilisée pour demander le déploiement du service réseau ; et
l'envoi d'une réponse de déploiement de service vers le dispositif dans le réseau public, dans lequel la réponse de déploiement de service est utilisée pour accepter le déploiement du service réseau.

10. Procédé selon la revendication 9, dans lequel la demande de déploiement de service est en outre utilisée pour indiquer une première politique préférentielle, et la première politique préférentielle est un élément d'information de frais préférentiels pour le dispositif de réseau privé qui est fourni au dispositif de réseau privé.

11. Procédé selon la revendication 8, dans lequel la fourniture d'une autorisation de déploiement de service réseau à un dispositif dans un réseau public comprend :
l'envoi d'une autorisation d'occupation de ressources vers le dispositif dans le réseau public, dans lequel l'autorisation d'occupation de ressources est utilisée pour indiquer qu'il est autorisé à occuper une ressource du dispositif de réseau privé pour déployer le service réseau.

12. Procédé selon la revendication 11, dans lequel l'autorisation d'occupation de ressources comprend en outre une seconde politique préférentielle, et la seconde politique préférentielle est un élément d'information de frais préférentiels pour le dispositif de réseau privé qui est proposé par le dispositif de réseau privé.

13. Procédé selon l'une quelconque des revendications 8 à 12, dans lequel le procédé comprend en outre :
la mise à jour du service réseau selon une indication du dispositif dans le réseau public.

14. Dispositif de réseau public, dans lequel le dispositif de réseau public est déployé dans un réseau public et comprend :
un module de gestion de nœud (211), configuré pour obtenir une adresse IPv6 d'un dispositif de réseau privé ;
un module de gestion de service (213), configuré pour : après l'obtention d'une autorisation de déploiement de service réseau à partir du dispositif de réseau privé,
indiquer au dispositif de réseau privé de déployer un service réseau ; et enregistrer une adresse IPv6 du dispositif de réseau privé déployé avec le service réseau ; et
un module de résolution d'adresse (212), configuré pour : recevoir une demande de requête de service provenant d'un client, dans lequel la demande de requête de service est utilisée pour demander l'adresse IPv6 du dispositif de réseau privé déployé avec le service réseau ; et fournir l'adresse IPv6 du dispositif de réseau privé avec le service réseau au client.

15. Dispositif de réseau privé, dans lequel le dispositif de réseau privé est déployé dans un réseau privé et comprend :
un module mandataire de service (112), configuré pour : fournir une autorisation de déploiement de service réseau à un dispositif dans un réseau public ; et déployer un service réseau selon une indication du dispositif dans le réseau public ; et
un module mandataire de nœud (111), configuré pour envoyer une adresse IPv6 du dispositif de réseau privé vers le dispositif dans le réseau public, dans lequel le module mandataire de service (112) est en outre configuré pour : recevoir une demande de service provenant d'un client, dans lequel la demande de service est utilisée pour demander le service réseau ; et renvoyer une réponse de service sur la base de la demande de service.
